# EUROPEAN PATENT SPECIFICATION

(11) **EP 1 302 636 B1**
(45) Date of publication and mention of the grant of the patent: **19.11.2014**
(21) Application number: 01951892.7
(22) Date of filing: 13.07.2001
(51) Int. Cl.: F01D 25/16, F16C 19/16, F02C 7/06, F02C 7/277, F16C 33/32, F16C 33/62, F16C 25/08, F16C 19/54

(54) **ROTATABLY SUPPORTING DEVICE FOR TURBOCHARGER**
DREHBARE BEFESTIGUNG FÜR EINEN TURBOLADER
DISPOSITIF DE SUPPORT ROTATIF POUR TURBOCOMPRESSEUR

(30) Priority: 18.07.2000 JP 2000217661
(43) Date of publication of application: 16.04.2003
(73) Proprietor: NSK Ltd., Shinagawa-ku, Tokyo 141 (JP)
(72) Inventor: YAKURA, Kenji, c/o NSK Ltd., Fujisawa-shi, Kanagawa 251-8501 (JP)
(74) Representative: Grünecker, Kinkeldey, Stockmair & Schwanhäusser
(86) International application number: PCT/JP2001/006096
(87) International publication number: WO 2002/006649

(56) References cited:
- EP-A- 0 365 178
- EP-A- 0 414 144
- EP-A- 0 472 170
- DE-A1- 4 334 339
- JP-A- 6 330 761
- JP-A- 11 247 863
- JP-A- 2000 120 668
- JP-U- 4 090 715
- JP-U- 63 009 429

## Description

### <TECHNICAL FIELD>

A rotation support apparatus for a turbocharger according to the present invention is incorporated into a turbocharger for increasing the output of an engine for a vehicle and is used to support a rotary shaft, to which an impeller and a turbine are connected, on a bearing housing in such a manner that the rotary shaft can be rotated.

### <BACKGROUND ART>

In order to increase the output of an engine without changing the displacement volume thereof, there is widely used a turbocharger which compresses the air to be fed into the engine due to the energy of exhaust gas . This turbocharger is structured such that a turbine disposed in the halfway portion of an exhaust gas passage is used to collect the energy of exhaust gas and a rotary shaft having the turbine fixed to the end portion thereof is driven to thereby rotate an impeller of a compressor disposed in the halfway portion of an air feed passage. The impeller, with the operation of the engine, rotates at the speed of the tens of thousands to the hundreds of thousands min ⁻¹ (r.p.m.) to compress the air fed to the engine through the air feed passage.

An example of a rotation support apparatus for a turbocharger according to the preamble of claim 1 is disclosed in JP 63 009 429 U, a further prior art document is EP 0 472 170 A2.

By the way, in order to enhance the response (the followup property with respect to the operation of an accelerator) of the above-structured turbocharger, recently, it has been widely practiced to support the rotary shaft by a ball bearing. For example, in Japanese Utility Model Registration Publication No. 2584936, for this purpose, there is disclosed a structure in which the rotary shaft of a turbocharger is supported by a ball bearing. Also, in the case of the ball bearing for a turbocharger disclosed in the present publication, an inner ring and a retainer are made of heat-resisting material and, further, the retainer is rotatably supported through the guidance of an outer ring. Therefore, by raising the temperature of lubricating oil to be fed into the ball bearing, the viscosity of the lubricating oil can be reduced as well as vibrations caused by the high-speed rotation of the retainer can be controlled.
Further, in the case of the above-mentioned ball bearing, a guide clearance existing between the inner peripheral surface of the outer ring and the outer peripheral surface of the retainer, clearances respectively existing between the inner surfaces of pockets constituting the retainer and their associated balls, and the surface roughness and circularity deviation of the inner peripheral surface of the outer ring and the outer peripheral surface of the retainer are regulated into their respective given ranges. Therefore, according to the ball bearing disclosed in the above-cited publication, not only the amount of the lubricating oil staying in the interior of the ball bearing can be reduced but also the rotation resistance of the ball bearing caused by the existence of the lubricating oil can be reduced. This can reduce torque necessary to rotate the turbocharger, thereby being able to enhance the response of the turbocharger.

In the case of a ball bearing which constitutes a rotation support apparatus for a turbocharger, because the operating speed thereof is fast and the environment temperature thereof is high, there are imposed very strict conditions in order to secure the lubricating property thereof. Especially, in the case of a ball bearing which is disposed on the turbine that is exposed to the heat of exhaust gas, since an increase in the temperature thereof is great, the lubricating condition is further stricter. Above all, the condition, which is imposed in order to secure the lubricating property in the rolling contact portions between an inner raceway formed in the outer peripheral surface of an inner ring and the rolling surfaces of balls, is strictest. The reason for this is as follows.

That is, in case where the ball bearing is operated at high speeds under the high temperature condition, the lubricating oil, the viscosity of which is reduced with an increase in the temperature, is splashed outwardly in the diameter direction of the ball bearing due to the centrifugal force thereof, only a small amount of lubricating oil is left on the surface of the inner raceway. And, since most of the remaining lubricating oil evaporates as the temperature of the inner ring rises, there is left only a slight amount of lubricating oil on the surface of the inner raceway. Due to this, an oil film is cut in the inner raceway and in the rolling contact portions between the inner raceway and the rolling surfaces of the balls, so that damage such as a scratch or abnormal wear is easy to occur in the inner raceway and balls rolling surfaces. In case where such damage occurs, vibrations and noises generated become large, which raise a problem that such vibrations and noises can displease an occupant of a vehicle or can shorten the life of the ball bearing.

In order to solve this problem, it can be expected that an inner ring, an outer ring and a plurality of balls constituting a ball bearing to be incorporated into a rotation support apparatus for a turbocharger are all or in part made of ceramics, as disclosed in EP 0 365 178 A2. However, the bearing composing parts made of ceramics are more expensive than the bearing composing parts that are made of hard metal such as bearing steel, which increases considerably the cost of the rotation support apparatus for a turbocharger, and, therefore, the bearing composing parts made of ceramics can be applied only to an expensive high-performance vehicle, that is, use of the bearing composing parts made of ceramics is limited.

Further, in order to be able to more evenly distribute axial and radial loads, roller bearings with an inclined contact ellipsoid have been employed, such as in DE 43 34 339 A1 or EP 0 414 144 A2.
However, none of the conventional structures has been found satisfactory with respect to a reduction of manufacturing costs and a simultaneous increase in the lifetime of the product. Therefore, the object of the present invention is to provide a rotation support apparatus for a turbocharger, which not only can control an increase in the cost thereof but also can prevent damage of the inner raceway and the rolling surfaces of the respective balls of a ball bearing disposed on the turbine side.

This object is solved by a rotation support apparatus with the features of claim 1. An advantageous embodiment is covered by claim 2.

### <DISCLOSURE OF THE INVENTION>

In a rotation support apparatus for a turbo-charger according to the present invention, similarly to a rotation support apparatus for a turbocharger which has been conventionally known, in order that a rotary shaft with an impeller fixed to one end portion thereof and a turbine fixed to the other end portion thereof can be rotatably supported inside a bearing housing, there are interposed a pair of ball bearings respectively between the two end portions of the rotary shaft and the inner peripheral surface of the bearing housing.

Especially, in a rotation support apparatus for a turbocharger according to the present invention, a first ball bearing interposed between one end portion of the rotary shaft and the inner peripheral surface of the bearing housing is an angular contact ball bearing having a contact angle with respect to a plurality of first balls respectively interposed between a first inner raceway formed in the outer peripheral surface of a first inner ring fitted with and fixed to the outer surface of one end portion of the rotary shaft and a first outer raceway formed in the inner peripheral surface of a first outer ring fitted with the inner surface of the bearing housing.

Also, a second ball bearing interposed between the other end portion of the rotary shaft and the inner peripheral surface of the bearing housing is an angular contact ball bearing having a contact angle of 5 - 25° in the opposite direction to the first balls with respect to a plurality of second balls respectively made of metal, interposed between a second inner raceway formed in the outer peripheral surface of a second inner ring made of metal and fitted with and fixed to the outer surface of the outer end portion of the rotary shaft and a second outer raceway formed in the inner peripheral surface of a second outer ring fitted with the inner surface of the bearing housing. And, at least one of the surface of the second inner raceway and the rolling surfaces of the second balls is nitrided. By the way, the state of the contact angle in the range of 5 - 25° corresponds to a state of a normal temperature <OPERATION>

According to the above-structured rotation support apparatus for a turbocharger of the present invention, of the second ball bearing to be disposed on the turbine side where an increase in the temperature is great, the contact portions between the second inner raceway and the rolling surfaces of the respective second balls where the lubricating condition is especially strict, are improved in the contact condition to thereby be able not only to control an increase in the cost of the second ball bearing but also to prevent the second inner raceway and the rolling surfaces of the respective second balls against damage.

That is, at least one of the surface of the second inner raceway and the rolling surfaces of the second balls is nitrided to thereby enhance the hardness of the nitrided surface portion, so that damage such as a scratch or abnormal wear can be made difficult to occur in the present surface portion. Also, since the type of contact of the contact portions between the surface of the second inner raceway and the rolling surfaces of the second balls is not such type of contact as found when the same kinds of metal are contacted, occurrence of adhesion in the contact portions can be prevented to thereby improve the lubricating condition of the contact portions, which makes it possible to prevent the above-mentioned vibrations and noises from being generated in the contact portions.

Also, because the contact angle of the second balls is regulated to the range of 5 - 25° , an increase in the temperature of the second ball bearing portion can be controlled to thereby control evaporation of the lubricating oil, which can also improve the lubricating condition of the contact portions. That is, in the case of the second ball bearing which is an angular contact ball bearing, in the contact portions between the rolling surfaces of the second balls and the surfaces of the second inner and outer raceways, contact ellipses respectively existing in the contact portions spin, which give rise to the slippage of the mutually contacted surfaces in the contact portions. Such slippage increases as the contact angle increases, so that an increase in the temperature due to friction heat generated by such increasing slippage becomes great. Also, in the high-speed rotation of the ball bearing, the centrifugal force is applied to the balls to thereby increase the contact angle between the second inner raceway and balls to make it larger than an initially set angle, with the result that the slippage increases and thus an increase in the temperature increases greatly.

In view of the above, in the case of a rotation support apparatus for a turbocharger according to the present invention, the contact angle of the second balls is regulated down to 25° or less to thereby control an increase in the temperature due to friction heat generated in the interior of the second ball bearing. In other words, in case where the contact angle of the second balls exceeds an angle of 25° , an increase in the temperature of the second balls is quite large, which makes it difficult to keep the contact ellipse portions in a good lubricating condition.

On the other hand, in case where the above contact angle is decreased, as the radial clearances of the second balls decrease, in the temperature rising time, the contact pressure of the contact portions between the rolling surfaces of the second balls and the surfaces of the second inner and outer raceways becomes excessively large, so that serious damage such as seizure is easy to occur. That is, when the turbocharger is in operation, as the temperature rises, the second balls, second inner ring and second outer ring expand; however, the amounts of such expansion vary from one another. In other words, the amount of expansion of the second inner ring, which is exposed to heat of exhaust gas through the rotary shaft and is also difficult to be cooled, increases; whereas the amount of expansion of the second outer ring, to which the exhaust gas heat is difficult to be transmitted when compared with the second inner ring and also which is fitted with the inner surface of the bearing housing easy to be cooled by the lubricating oil, decreases. As a result of this, as the temperature rises, not only the clearance between the second inner and outer raceways becomes smaller, but also the diameter of each of the second balls increases, so that the above-mentioned radial clearance is caused to disappear and further the radial clearance becomes negative. Due to this, the contact pressure of the contact portions increases up to an excessively high level, with the result that, as described above, serious damage such as seizure is easy to occur.

In view of the above, in the case of a rotation support apparatus for a turbocharger according to the present invention, as the contact angle of the second balls, there is set an angle of 5° or more to thereby secure the above radial clearance even in the temperature rising time, which makes it possible to prevent occurrence of serious damage such as seizure in the contact portions.

### <BRIEF DESCRIPTION OF THE DRAWINGS>

Fig. 1 is a section view of an embodiment of a rotation support apparatus for a turbocharger according to the present invention, showing a state thereof in which the rotation support apparatus is incorporated into an experimental apparatus structured as an imitated version of an actual turbocharger;
Fig. 2 is an enlarged view of the A portion shown in Fig. 1;
Fig. 3 is a section view of a ball bearing taken out of the embodiment; and,
Fig. 4 is a graphical representation of the results of a test conducted on the embodiment for the endurance time thereof.

By the way, referring to reference characters used in the drawings, 1 designates a rotation support apparatus, 2 a bearing housing, 3 a rotary shaft, 4 a first ball bearing, 5 a second ball bearing, 6 an impeller, 7 a turbine, 8 an exhaust gas passage, 9 an air feed passage, 10 a second outer raceway, 11 a second outer ring, 12 a second inner raceway, 13 a second inner ring, 14 a second ball, 15 a retainer, 16 a pocket, 17 a first outer ring, 18 a first inner ring, 19 a compression spring, 20 a pressure ring, 21 a casing, 22 a rotation speed detect sensor, 23 a shift sensor, 24 a temperature sensor, 25 a filter, 26 a nozzle hole, and 27 an oil discharge port, respectively.

### <BEST MODE FOR CARRYING OUT THE INVENTION>

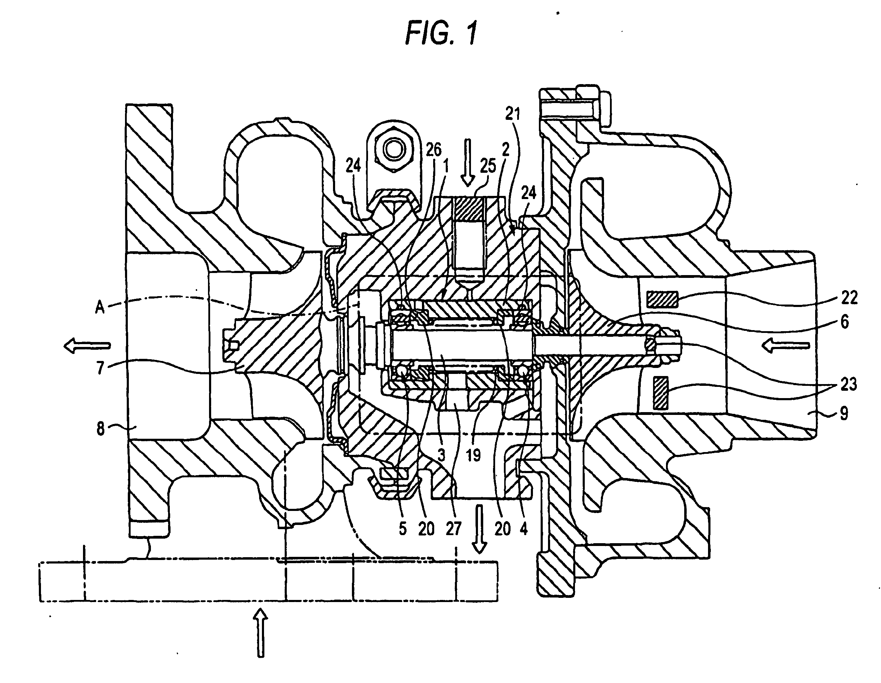

Now, Figs. 1 to 3 show an embodiment of a rotation support apparatus for a turbocharger according to the present invention. By the way, Fig. 1 shows an experimental apparatus which is used to confirm the effects of the present invention. However, the present experimental apparatus is structured as an imitated version of an actual turbocharger, while the structure of the rotation support apparatus portion of the experimental apparatus is similar to that of a turbocharger actually incorporated into an engine for running. Therefore, description will be given below of a rotation support apparatus for a turbocharger according to the present invention while discussing the structure of the experimental apparatus shown in Fig. 1.

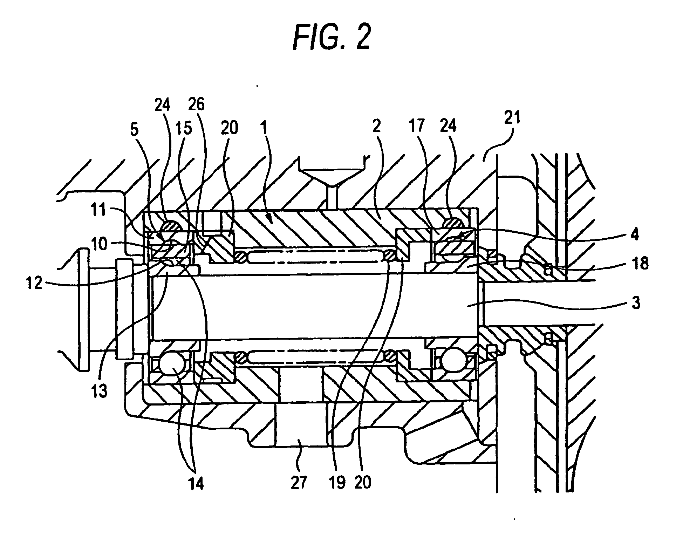

The rotation support apparatus 1 is structured so as to be able to support the rotary shaft 3 inside the bearing housing 2 by the first and second ball bearings 4, 5, which are respectively angular contact ball bearings, in such a manner that the rotary shaft 3 can be rotated. The impeller 6 is fixed to one end portion (in Figs. 1 and 2, the right end portion) of the rotary shaft 3, while the turbine 7 is fixed to the other end portion (in Figs. 1 and 2, the left end portion) of the rotary shaft 4; and, the rotary motion of the turbine 7 can be transmitted to the impeller 6. The turbine 7 is disposed in the halfway portion of the exhaust gas passage 8, while the impeller 6 is disposed in the halfway portion of the air feed passage 9. When the engine is in operation, the turbine 7 is driven by the exhaust gas which is jetted out from the engine and flows through the exhaust gas passage. The rotary motion of the turbine 7 driven in this manner is transmitted through the rotary shaft 3 to the impeller 6.

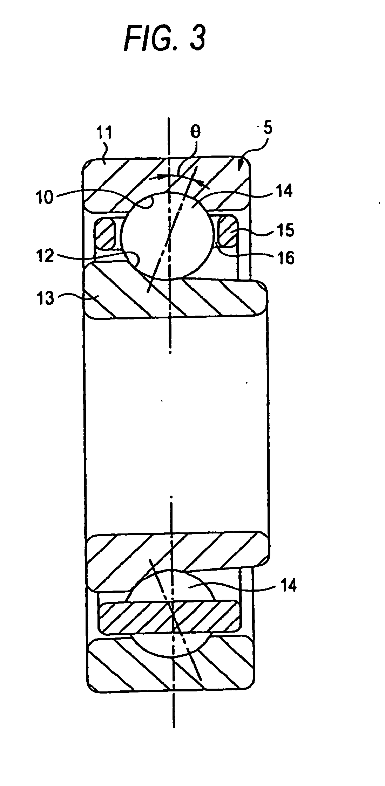

The first and second ball bearings 4 and 5, which constitute the rotation support apparatus 1, are respectively such angular contact ball bearings as shown in Fig. 3. These two first and second ball bearings 4 and 5 are basically identical in structure with each other. That is, the present invention is able not only to prevent damage of the second ball bearing 5 exposed to a stricter lubricating condition than the first ball bearing 4 but also to control an increase in the cost thereof. On the other hand, the first ball bearing 4 is exposed to a lubricating condition which is not so strict. Therefore, in the case of the first ball bearing 4, there may be used an ordinary angular contact ball bearing, or, of course, there may be used an angular contact ball bearing having the same specifications as the second ball bearing 5. Accordingly, description will be given below mainly of the second ball bearing 5.

The second ball bearing 5 comprises the second outer ring 11 having the second outer raceway 10 formed in the inner peripheral surface thereof, the second inner ring 13 having the second inner raceway 12 formed in the outer peripheral surface thereof, and the plurality of second balls 14, 14 rollably interposed between the second inner raceway 12 and the second outer raceway 10. Also, the second balls 14, 14 are rollably held in the plurality of pockets 16 respectively formed in the circular-ring-shaped retainer 15, one ball in one pocket. Also, in the case of the present embodiment, the second inner ring 13 is formed as a so called counterbore with one-side shoulder portion thereof removed. Further, the outer peripheral surface of the retainer 15 is disposed adjacent to and opposed to the inner peripheral surface of the second outer ring 11 to thereby provide an outer ring guide which regulates the diameter-direction position of the retainer 15 by the second outer ring 11.

According to the thus-structured second ball bearing 5, the second outer ring 11 is fitted with the inner surface of the end portion of the bearing housing 2 and the second inner ring 13 is fitted with and fixed to the outer surface of the other end portion of the rotary shaft 3, whereby the other end portion of the rotary shaft 3 is rotatably supported on the bearing housing 2. Also, as described above, in the case of the first ball bearing 4, the first outer ring 17 is fitted with the inner surface of the end portion of the bearing housing 2 and the first inner ring 18 is fitted with and fixed to the outer surface of one end portion of the rotary shaft 3, whereby one end portion of the rotary shaft 3 is rotatably supported on the bearing housing 2. The compression spring 19 applies to the first and second outer rings 17 and 11 elastic forces respectively going in the directions to part the two outer rings apart from each other. That is, the two pressure rings 20 and 20 are respectively butted against the mutually opposed end faces of the two outer rings 17, 11 and, between the two pressure rings 20 and 20, there is held the compression spring 19. Therefore, a contact angle of a back-to-back combination (DB) type is given to the first and second ball bearings 4 and 5.

As described above, the basic structure of the rotation support apparatus 1 for a turbocharger itself is similar to the conventional structure that is generally known. In the case of the experimental apparatus shown in the drawings, the bearing housing 2 is fitted with and fixed to the inner surface of the casing 21 constituting a turbocharger to thereby support the rotary shaft 3 in the interior of the casing 21 in a freely rotatable manner.

Especially, according to the rotation support apparatus 1 of the present invention, in order to be able not only to control an increase in the cost thereof but also to secure the durability of the second ball bearing 5, the specifications and factors of the second ball bearing 5 are regulated in the following manner. That is, firstly, the second outer ring 11, second inner ring 13 and balls 14, 14 constituting the second ball bearing 5 are respectively made of iron-system hard metal (including stainless-steel-system hard metal). Especially, one or both of the second inner ring 13 and balls 14, 14 is or are made of hard metal the surface of which can be nitrided.

And, the contact angle θ to be applied to the respective balls 14, 14 is regulated to the range of 5 - 25° . Also, at least one of the surface of the second inner raceway 12 formed in the outer peripheral surface of the second inner ring 13 and the rolling surfaces of the balls 14, 14 is or are nitrided to be thereby hardened.

According to the above-structured rotation support apparatus 1 for a turbocharger of the present invention, of the composing parts of the second ball bearing 5 to be disposed on the turbine 7 side where an increase in the temperature is large, the contact portions between the second inner raceway 12 and the rolling surfaces of the balls 14, 14 are improved in the contact condition thereof, thereby being able not only to control an increase the cost thereof but also to prevent the second inner ring 13 and the rolling surfaces of the balls 14, 14 against damage. The reason for this is as follows.

That is, firstly, since at least one of the surface of the second inner raceway 12 and the rolling surfaces of the balls 14, 14 is or are nitrided, the thus nitrided surface portion is enhanced in hardness and is thereby made hard to suffer from damage such as a scratch or abnormal wear. In other words, damage such as a scratch or abnormal wear is hard to occur in the portion the surface hardness of which has been enhanced by the nitriding treatment; and, the mating surface to be rollingly contacted with the surface having such enhanced hardness is made hard to suffer from the damage that could otherwise be caused due to the damage of the surface, so that the mating surface can be made hard to be damaged accordingly. Also, since the contact type of the contact portions between the second inner raceway 12 and the rolling surfaces of the balls 14, 14 is not a contact type found when the same kinds of metal are contacted with each other, adhesion can be prevented against occurrence in the contact portions, which not only can enhance the lubricating condition of the contact portions but also can prevent vibrations and noises from being generated in the contact portions. That is, as known well, in case where the same kinds of metal are contacted with each other not through an oil film, in the case of poor lubrication, damage such as seizure involved with adhesion is easy to occur; but, on the other hand, in case where a nitrided layer is formed on one of the metal surfaces, the contact between the surfaces is not the contact found between the same kinds of metal, thereby being able to prevent the above-mentioned damage. Also, even in case where nitrided layers are formed on two surfaces which are contacted with each other, the nitrided layers are hard to adhere, which can also prevent occurrence of the above damage.

Also, because the contact angle θ of the second balls 14, 14 is regulated to the range of 5 - 25° , an increase in the temperature of the second ball bearing 5 portion can be controlled to thereby restrict the evaporation of the lubricating oil in the contact portions, which can also enhance the lubricating condition of the contact portions. That is, in the case of the second ball bearing 5 which is an angular contact ball bearing, in the contact portions between the rolling surfaces of the second balls 14, 14 and the inner and outer raceways 12, 10, contact ellipses existing in these contact portions spin to thereby cause slippage between these mutually contacted surfaces in these contact portions. In other words, as the second balls 14, 14 rotate around the second ball bearing 5 while revolving on their own axes, the contact ellipses also rotate around the second ball bearing 5 while revolving on their own axes. And, as the major-direction portion of each of the contact ellipses revolves once on its own axis each time the balls 14, 14 rotate around the second ball bearing 5, slippage occurs in the contact ellipse portion. Such slippage increases greatly as the contact angle θ increases and, the resulting friction heat causes the temperature to increase greatly. Also, in the high-speed rotating time, the contact angle of the second balls 14, 14 becomes larger than the initially set angle, with the result that the slippage increases and thus an increase in the temperature becomes great.

In view of the above, in the case of a rotation support apparatus for a turbocharger according to the present invention, the contact angle θ of the second balls 14, 14, in the state of the normal temperature, is regulated to the range of 5 - 25° to thereby control an increase in the temperature due to the friction heat that is generated in the interior of the second ball bearing 5. In other words, in case where the contact angle θ of the second balls 14, 14, in the state of the normal temperature, exceeds 25° , the slippage occurring in the contact ellipses increases greatly to thereby raise the temperature of the second ball bearing 5 greatly, which makes it difficult to keep the contact ellipse portions in a good lubricating condition.

On the other hand, in case where the contact angle θ is reduced, as the radial clearance of the second ball bearing 5 decreases, in the temperature rising time, the contact pressure of the contact portions between the rolling surfaces of the second balls 14, 14 and the second inner and outer raceways 12, 10 becomes excessively large, so that serious damage such as seizure is easy to occur in the contact portions. That is, when the turbocharger is in operation, as the temperature increases, the second balls 14, 14 and the second inner and outer rings 13, 11 respectively expand but the respective elements 14, 13, 11 differ from one another in the expansion amounts thereof. That is, the second inner ring 13 is exposed through the rotary shaft 3 to the heat of the exhaust gas flowing through the exhaust gas passage 8 and is difficult to be cooled; and thus, the heat expansion amount of the second inner ring 13 is large. On the other hand, the second outer ring 11 is more difficult to receive the heat of the exhaust gas than the second inner ring 13 and is fitted with the inner surface of the bearing housing 2 which can be cooled effectively by the lubricating oil; and thus, the heat expansion amount of the second outer ring 11 is small.

As a result of this, as the temperature rises, not only a clearance between the second inner and outer raceways 12 and 10 decreases but also the diameters of the second ball 14, 14 increase, thereby causing the above radial clearance to disappear. As shown in Figs. 1 to 3, when a preload is applied to the first and second ball bearings 4 and 5 by the compression spring 19 and also there exists a contact angle in the two ball bearings 4 and 5 (that is, in case where the contact angle θ shown in Fig. 3 is not zero), in case where not only the clearance between the second inner and outer raceways 12 and 10 decreases but also the diameters of the second ball 14, 14 increase, the contact angle θ decreases, thereby being able to absorb the shift amounts of the respective elements caused by the above heat expansion. However, in case where the contact angle θ is small even in the normal temperature state, the contact angle θ is not be able to absorb the shift amounts of the respective elements caused by the above heat expansion, so that the above radial clearance is lost and further becomes negative. As a result of this, the contact pressure of the contact portions between the rolling surfaces of the second balls 14, 14 and the second inner and outer raceways 12, 10 becomes excessively large, so that, as described above, serious damage such as seizure is easy to occur in the contact portions. On the other hand, in the case of a rotation support apparatus 1 for a turbocharger according to the present invention, the contact angle θ of the second balls 14, 14 is set to be equal to or larger than 5° , there can be secured sufficient room for absorbing the shift amounts of the respective elements caused by the above heat expansion, thereby being able to secure a radial clearance even when the temperature rises, which makes it possible to prevent occurrence of serious damage such seizure in the contact portions .

Next, description will be given below of the structures of the un-described portions of the experimental apparatus shown in Figs. 1 and 2 as well as a test conducted in order to know the effects of the size of the above-mentioned contact angle θ on the durability of the second ball bearing 5.

In the above experimental apparatus, on the portion of one end portion of the rotary shaft 3 to which the impeller 6 is fixed, there are disposed a rotation speed detect sensor 22 and a pair of shift sensors 23, 23, thereby being able to detect the rotation speeds and vibrations of the rotary shaft 3. By the way, the pair of shift sensors 23, 23 are disposed in the portion which is 90° out of phase with respect to the rotation direction of the rotary shaft 3, thereby being able to detect the radial vibrations of the rotary shaft 3.

Also, on the outer peripheral surface of a portion of the first outer ring 17 and on the outer peripheral surface of a portion of the second outer ring 11, there are disposed temperature sensors 24, 24 respectively, thereby being able to measure the temperatures of the first and second ball bearings 4 and 5.

Further, within the casing 21, there is formed an oil feed passage, thereby being able to lubricate the respective ball bearings 4 and 5. When the present experimental apparatus is in operation, after foreign substances are removed by the filter 25, the lubricating oil passes through a clearance space between the inner peripheral surface of the casing 21 and the outer peripheral surface of the bearing housing 2 and is jetted out from the nozzle hole 26 formed in the pressure ring 20 disposed adjacent to the second outer ring 11 into the interior of the second ball bearing 5, thereby being able to lubricate the second ball bearing 5 by jet lubrication. The lubricating oil, which is jetted out toward the second ball bearing 5 in this manner, lubricates not only the second ball bearing 5 but also the first ball bearing 4 and, after then, it is discharged from the oil exhaust port 27.

Using the above-structured experimental apparatus, a test was conducted on seven samples respectively having the contact angle θ of 3° , 5° , 10° , 15° , 20° , 25° , or 30° to measure the endurance time until damage occurs in the respective samples. In the present test for measurement of the endurance time, the turbine was driven by high-temperature gas of 500° C, while the rotary shaft 3 was rotated at one hundred fifty thousand min⁻¹ (r.p.m.). Also, an axial preload of 30N (3.06 kgf) was applied to the first and second ball bearings 4 and 5 by the compression spring 19. Further, the temperature of the periphery (atmosphere temperature) of the casing 21 was set at 100° C. By the way, the test was conducted continuously for 400 hrs. The samples, in which no damage occurred at the time of passage of 400 hrs., were regarded as good; and, on the other hand, in the case of the samples in which damage occurred before passage of 400 hrs., the test was cancelled at the time of occurrence of the damage. Also, in each of the second ball bearings 5 that were used as the samples in the test, the second outer ring 11, second inner ring 13 and balls 14, 14 were made of stainless-steel-system bearing steel and, of them, the rolling surfaces of the second balls 14, 14 were nitrided.

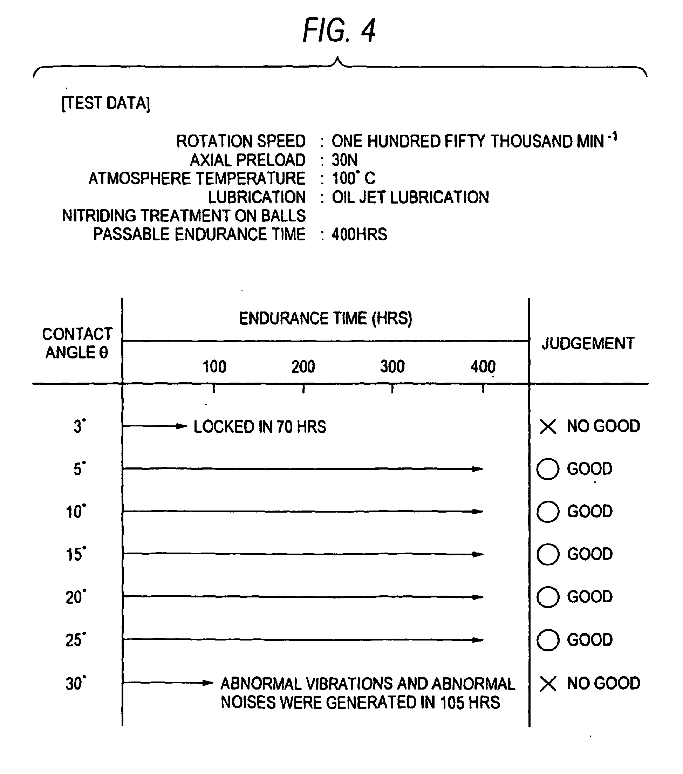

Fig. 4 shows the results of the test conducted under the above conditions. In the case of the sample having the contact angle θ of 3° , the second ball bearing 5 was locked due to seizure at the time of passage of 70 hrs. Also, in the case of the sample having the contact angle θ of 30°, at the time of passage of 105 hrs., there were generated vibrations and noises due to abnormal wear. On the other hand, in the case of the samples the contact angle θ of which are in the range of 5 - 25° , no damage had occurred before the test of 400 hrs. was ended. The results of the test show that, in case where the contact angle θ is set in the range of 5 - 25° , occurrence of damage in the rolling contact portions can be prevented to thereby be able to realize a rotation support apparatus for a turbocharger which is excellent in durability.

### <INDUSTRIAL APPLICABILITY>

A rotation support apparatus for a turbocharger according to the present invention is structured and operates in the above-mentioned manner and, therefore, it not only can control an increase in the cost thereof down to a minimum but also can secure the sufficient durability thereof.

## Claims

1. A rotation support apparatus (1) for a turbocharger, comprising:
a pair of ball bearings (4,5) interposed respectively between the two end portions of a rotary shaft (3) and the inner peripheral surface of a bearing housing (2) for rotatably supporting the rotary shaft (3) with an impeller (6) fixed to one end portion thereof and a turbine (7) fixed to the other end portion thereof inside of the bearing housing (2),
a first one (4) of said pair of ball bearings (4,5) interposed between the one end portion side of said rotary shaft (3) and the inner peripheral surface of said bearing housing (2)being an angular contact ball bearing (4) having a contact angle with respect to a plurality of first balls respectively interposed between a first inner raceway formed in the outer peripheral surface of a first inner ring (18) fitted with the outer surface of the one end portion side of said rotary shaft (3) and a first outer raceway formed in the inner peripheral surface of a first outer ring (17) fitted with the inner surface of said bearing housing (2),
a second inner raceway (12) formed in the outer peripheral surface of a second inner ring (13) made of metal, fitted with and fixed to the other end portion side of said rotary shaft (3), and a second outer raceway (10) formed in the inner peripheral surface of a second outer ring (11) fitted with the inner surface of said bearing housing (21),
**characterized in that** a second one (5) of said pair of ball bearings (4,5) interposed between the other end portion side of said rotary shaft (3) and the inner peripheral surface of said bearing housing (2) is an angular contact ball bearing (5) having a contact angle (θ) in the range of 5 - 25° in the opposite direction to said first balls with respect to a plurality of second balls (14) respectively interposed between the second inner raceway (12) and the second outer raceway (10), wherein at least one of the surface of said second inner raceway (12) and the rolling surfaces of said second balls (14) is or are nitrided.

2. Rotation support apparatus according to claim 1, wherein at least one of the second inner ring (13) and the balls (14) is or are made of hard metal, the surface of which is nitrided.

## Patentansprüche

1. Rotationshaltevorrichtung (1) für einen Turbolader, umfassend:
zwei Kugellager (4, 5) die jeweils zwischen den beiden Endabschnitten einer Drehwelle (3) und der Innenumfangsfläche eines Lagergehäuses (2) angeordnet sind, um die Drehwelle (3) drehbar zu lagern, wobei ein Flügelrad (6) an einem Endabschnitt derselben und eine Turbine (7) an dem anderen Endabschnitt derselben innerhalb des Lagergehäuses (2) angebracht sind,
wobei ein erstes (4) der beiden Kugellager (4, 5), das zwischen der einen Endabschnittsseite der Drehwelle (3) und der Innenumfangsfläche des Lagergehäuses (2) angeordnet ist, ein Schrägkugellager (4) ist, das einen Berührungswinkel in Bezug auf eine Vielzahl erster Kugeln hat, die jeweils zwischen einer ersten inneren Lauffläche, die in der Außenumfangsfläche eines ersten Innenrings (18) ausgebildet ist, in den die Außenoberfläche der einen Endabschnittsseite der Drehwelle (3) eingefügt ist, und einer ersten äußeren Lauffläche angeordnet sind, die in der Innenumfangsfläche eines ersten Außenrings (17) ausgebildet ist, der in die Innenoberfläche des Lagergehäuses (2) eingefügt ist,
eine zweite innere Lauffläche (12), die in der Außenumfangsfläche eines zweiten Innenrings (13), der aus Metall besteht, ausgebildet ist, in die die andere Endabschnittsseite der Drehwelle eingefügt und befestigt ist, und eine zweite äußere Lauffläche (10), die in der Innenumfangsfläche eines zweiten Außenrings (11) ausgebildet ist, der in die Innenoberfläche des Lagergehäuses (21) eingefügt ist,
**dadurch gekennzeichnet, dass** ein zweites (5) der beiden Kugellager (4, 5), das zwischen der anderen Endabschnittseite der Drehwelle (3) und der Innenumfangsfläche des Lagergehäuses (2) eingefügt ist, ein Schrägkugellager (5) ist, das einen Berührungswinkel (θ) in dem Bereich von 5-25° in der entgegengesetzten Richtung zu den ersten Kugeln in Bezug auf eine Vielzahl zweiter Kugeln (14) hat, die jeweils zwischen der zweiten inneren Lauffläche (12) und der zweiten äußeren Lauffläche (10) angeordnet sind, wobei die Oberfläche der zweiten inneren Lauffläche (12) und/oder die Rollflächen der zweiten Kugeln (14) nitriert ist oder sind.

2. Rotationshaltevorrichtung nach Anspruch 1, bei der der zweite Innenring (13) und/oder die Kugeln (14) aus Hartmetall besteht oder bestehen, dessen Oberfläche nitriert ist.

## Revendications

1. Appareil de support de rotation (1) pour un turbocompresseur, comportant :
une paire de roulements à billes (4, 5) interposés de manière respective entre les deux parties d'extrémité d'un arbre rotatif (3) et la surface périphérique intérieure d'un logement de roulement (2) afin de supporter de façon rotative l'arbre rotatif (3) avec une roue à aubes (6) fixée sur une partie d'extrémité de celui-ci et une turbine (7) fixée sur l'autre partie d'extrémité de celui-ci à l'intérieur du logement de roulement (2),
un premier (4) de ladite paire de roulements à billes (4, 5) interposé entre le premier côté de partie d'extrémité dudit arbre rotatif (3) et la surface périphérique intérieure dudit logement de roulement (2) étant un roulement à billes à contact oblique (4) ayant un angle de contact par rapport à une pluralité de premières billes respectivement interposées entre une première piste intérieure formée dans la surface périphérique extérieure d'une première bague intérieure (18) pourvue de la surface extérieure du premier côté de partie d'extrémité dudit arbre rotatif (3) et une première piste extérieure formée dans la surface périphérique intérieure d'une première bague externe (17) pourvue de la surface intérieure dudit logement de roulement (2),
une deuxième piste intérieure (12) formée dans la surface périphérique extérieure d'une deuxième bague intérieure (13) fabriquée en métal, pourvue de et fixée sur l'autre côté de partie d'extrémité dudit arbre rotatif (3), et une deuxième piste extérieure (10) formée dans la surface périphérique intérieure d'une deuxième bague extérieure (11) pourvue de la surface intérieure dudit logement de roulement (21),
**caractérisé en ce que** un deuxième (5) de ladite paire de roulements à billes (4, 5) interposé entre l'autre côté de partie d'extrémité dudit arbre rotatif (3) et la surface périphérique intérieure dudit logement de roulement (2) est un roulement à billes à contact oblique (5) ayant un angle de contact (θ) dans la plage de 5 à 25° dans la direction opposée aux dites premières billes par rapport à une pluralité de deuxièmes billes (14) respectivement interposées entre la deuxième piste intérieure (12) et la deuxième piste extérieure (10), au moins une de la surface de ladite deuxième piste intérieure (12) et des surfaces de roulement desdites deuxièmes billes (14) est ou sont nitrurées.

2. Appareil de support de rotation selon la revendication 1, dans lequel au moins une de la deuxième bague intérieure (13) et des billes (14) est ou sont fabriquées en métal dur, dont la surface nitrurée.
